# EUROPÄISCHE PATENTSCHRIFT

(11) **EP 0 785 100 B1**
(45) Veröffentlichungstag und Bekanntmachung des Hinweises auf die Patenterteilung: **10.04.2002**
(21) Anmeldenummer: 97250007.8
(22) Anmeldetag: 17.01.1997
(51) Int. Cl.: B60L 5/22

(54) **Stromabnehmer für Schienenfahrzeuge mit Neigetechnik**
Current collector with inclination device for railway vehicle
Collecteur de courant avec système d'inclinaison pour véhicule ferroviaire

(30) Priorität: 19.01.1996 DE 19603077
(43) Veröffentlichungstag der Anmeldung: 23.07.1997
(73) Patentinhaber: DWA Deutsche Waggonbau GmbH, 12526 Berlin (DE)
(72) Erfinder: Tzschoppe, Günter, Dipl.-Ing., 15732 Eichwalde (DE); Plamper,Rudolf,Dipl.-Ing.Ing., 10369 Berlin (DE); Schwiegel,Thomas,Dipl.-Ing., 15751 Niederlehme (DE); Derdulla,Torsten,Dipl.-Ing., 99094 Erfurt (DE)

(56) Entgegenhaltungen:
- DE-A- 2 243 405
- DE-A- 3 232 153
- PATENT ABSTRACTS OF JAPAN vol. 16, no. 477 (M-1320), 5.Oktober 1992 & JP 04 172901 A (RAILWAY TECHNICAL RES), 19.Juni 1992,

## Beschreibung

Die Erfindung bezieht sich auf einen quer zur Längsachse des Fahrzeuges angeordneten Stromabnehmer, der aus einer Rahmenkonstruktion besteht, die sich der jeweiligen Neigung des Fahrzeuges anpaßt.

Die Steuerung bzw. Bewegung der gegenläufigen Neigung des Stromabnehmers zur Wagenkastenneigung ist in verschiedenen, Ausführungen bekannt:

Nach DE 32 32 153 A1 wird der Stromabnehmer auf dem Wagendach in bogenförmigen Rollenführungen bewegt, wobei der Radienmittelpunkt des Bogens bei aktiver Neigetechnik im Drehpol des Wagenkastens dicht über dem Fahrwerk liegt und in Längsrichtung über der Fahrwerksachse angeordnet ist. Nachteilig bei dieser Ausführung ist die Anordnung der aufwendigen mechanischen Verbindung zwischen Laufwerk und Stromabnehmerneigeeinrichtung, die eine Einengung des räumlichen Innenprofils mit sich bringt und außerdem masseaufwendig gestaltet ist.

Weiterhin ist eine Stromabnehmerneigeeinrichtung bekannt (Railway Gazette International, Mai 1980 Blatt XI), die ebenfalls mit einem Gestänge vom Laufwerk zum Stromabnehmer ausgebildet ist, wobei ein Kipphebelsystem zur Anwendung kommt, das eine Gegensteuerung des Stromabnehmers zur Wagenkastenneigung bewirkt. Nachteilig bei dieser Ausführung ist ebenfalls die Einengung des räumlichen Innenprofils und sie ist nicht geeignet für Schienenfahrzeuge mit Wagenübergangseinrichtungen.

Die bekannten Ausführungen sind mittels Seilzügen oder Gestängen mit Winkelhebel variierbar.

Nach DE 22 43 405 ist eine direkte Steuerung des Stromabnehmers mittels diagonal angeordneter Hydraulik-Zylinder bekannt, deren Hydraulikleitungen von der einen Seite des Wagenkastenneigungsantriebes zur anderen Seite des Neigeantriebes des Stromabnehmers führen.

Ein Nachteil bei dieser Ausführung ist die Abhängigkeit des Systems von der Wagenkastenfederung.

Eine andere Ausführungsform wird bei einem Pendelwagen (Broschüre "Neues aus Japan", herausgegeben von der Japanischen Botschaft in der Bundesrepublik Deutschland, Nr. 156, März 1970) verwirklicht. Der flexible Stromabnehmer besteht aus einem Pendelsystem, bei dem die Pendel stehend auf dem Wagenkastendach angeordnet sind. Diese nicht kompakte Anordnung ist ohne zusätzliche Stabilisatoren labil und würde bei Ausfall der Steuerung sich nicht von allein in die Normallage bewegen. Außerdem müssen viele Lagerstellen bzw. Drehpunkte bei Belastungen in Fahrtrichtung besonders stabil ausgebildet werden.

Aufgabe der Erfindung ist es, einen Stromabnehmer für Schienenfahrzeuge mit Neigetechnik der eingangs genannten Art zu schaffen, der unabhängig von der Wagenkastenfederung einfach und unkompliziert und fehlerfrei funktioniert und mit geringen bewegten Massen auskommt und dadurch geringe Trägheiten aufweist und durch seine konstruktive stabile Ausführung sich auch für Fahrzeuge mit hohen Geschwindigkeiten eignet und durch die bemessene räumliche Anordnung der Rahmenkonstruktion einschließlich Stromabnehmer das Innenprofil nicht einengt, wobei die Einhaltung der Luftstrecken gegenüber spannungsführenden Teilen gewährleistet wird.

Die Aufgabe wird erfindungsgemäß durch die Merkmale des Patentanspruches gelöst, d.h., daß eine Rahmenkonstruktion mit hängenden Pendeln verwendet wird, bei der die oberen und unteren Lagerabstände unterschiedlich groß ausgebildet sind und damit stets eine vertikale Stellung des Stromabnehmers zwischen Schiene und Fahrdraht erreicht wird, wobei die gitterförmige Rahmenkonstruktion in Leichtbauweise ausführbar ist und durch Doppellagerung der Pendel große Schubkräfte aufgenommen werden können und damit den auftretenden Reibungs- und aerodynamischen Fahrwiderständen entgegenwirkt und der seitlich angeordnete Linearantrieb synchron mit der Neigung des Wagenkastens von einem Steuersystem über bekannte hydraulische oder pneumatische oder mechanische Verbindungsleitungen bewegt wird.

Ein Ausführungsbeispiel der Erfindung soll anhand der Zeichnungen näher erläutert werden. Die Zeichnungen zeigen in:
- Fig. 1:: die schematische Darstellung eines geneigten Wagens im Querschnitt mit Stromabnehmer in Arbeitsstellung,
- Fig. 2:: die Seitenansicht des Stromabnehmers.

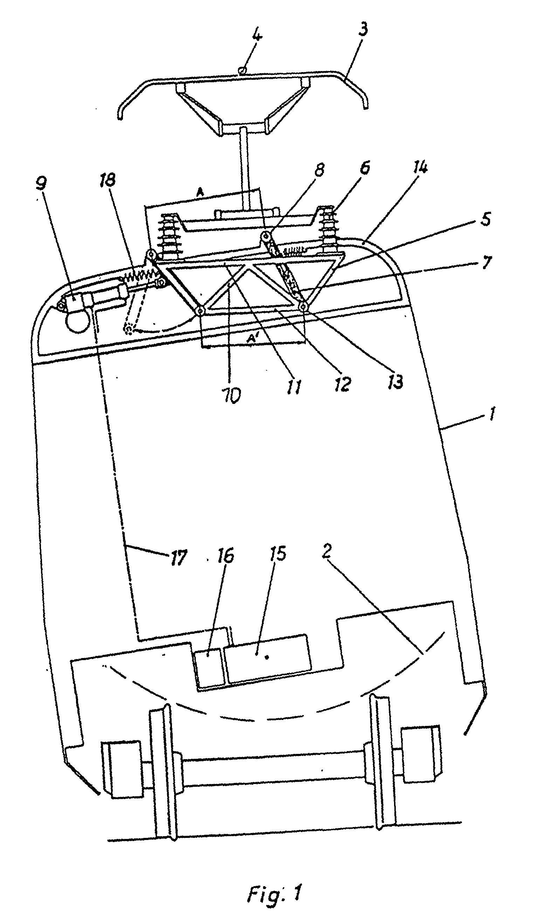

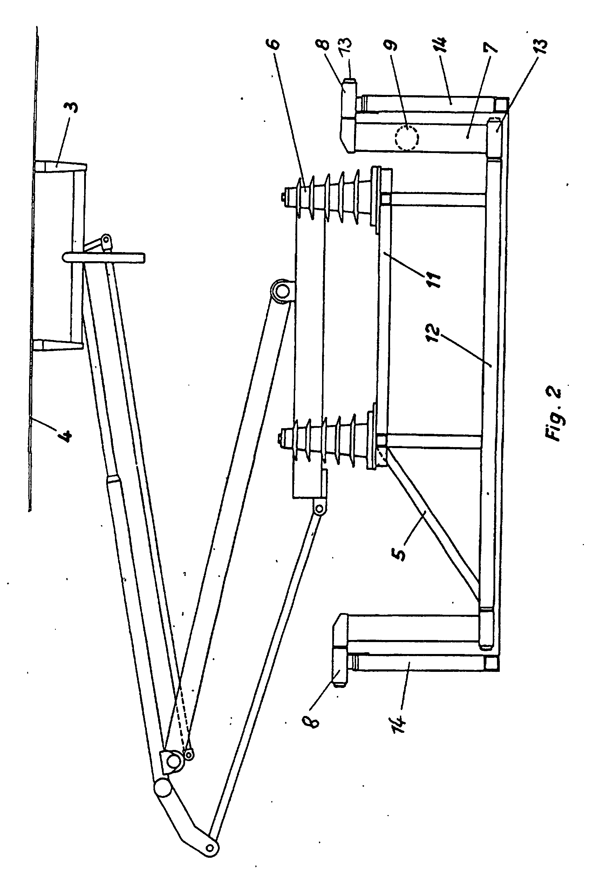

Gemäß Figuren 1 und 2 sind auf einem Wagenkasten 1 zwei hintereinander angeordnete Grundrahmen 14 vorgesehen. Zwischen diesen Grundrahmen 14 ist ein kompakter Rahmen 5 pendelnd aufgehangen, auf dem ein Stromabnehmer 3 aufgebaut ist. Der Rahmen 5 besteht aus einem oberen Rahmenteil 11 und einem unteren Rahmenteil 12. Auf Grund der auftretenden Beschleunigungskräfte, die in Fahrtrichtung 3g und seitlich 1g betragen, sind zur Versteifung des Rahmens 5 Verstärkungen 10 vorgesehen. Diese Verstärkungen 10 können z.B. Knotenbleche, Schubbleche, Diagonalstreben sein. Der Stromabnehmer 3 mit Isolatoren 6 ist auf dem oberen Rahmenteil 11 befestigt. An den oberen Teilen der vorderen und hinteren Grundrahmen 14 sind je zwei Lagerböcke 8 angeordnet, in denen zwei vordere und zwei hintere rechte und linke Pendel 7 aufgehangen sind. An den unteren Enden der Pendel 7 ist der Rahmen 5 über Lager 13 aufgehangen. Der Grundrahmen 14 mit Rahmen 5 stellt eine komplette in Leichtbauweise ausgeführte Bau- und Montagegruppe dar, die bei Bedarf auch zusammen mit dem kompletten Stromabnehmer 3 vorteilhaft ausgewechselt werden kann. Die oberen Lagerböcke 8 am Grundrahmen 14 sind mit einem Abstand A und die Lager 13 am unteren Rahmenteil 12 sind mit einem Abstand A' angeordnet. Der Abstand A ist dabei größer als der Abstand A'. Diese geometrische Anordnung der Lagerböcke 8 mit den Abständen A, A' ist so ausgebildet, daß annähernd die mittlere und normale Stellung des Stromabnehmers 3 unter einem Fahrdraht 4 gewährleistet ist. Die bei der Neigebewegung entstehende vertikale Höhenabweichung kann vernachlässigt werden, da für den Stromabnehmer 3 von der unteren Abschaltlage bis zum Anliegen bei niedrigster Fahrdrahthöhe genügend Spielraum vorhanden ist. Zur Einhaltung eines konstanten Anpreßdruckes des Stromabnehmers 3 an dem Fahrdraht 4 ist im Stromabnehmer 3 eine geneigte bekannte Vorrichtung vorgesehen. Zwischen Rahmen 5 und Grundrahmen 14 ist ein Linearantrieb 9 angeordnet. Durch die Schwerkraft des Stromabnehmers 3 und des Rahmens 5 in Richtung Gleisbodeninnenseite muß der Linearantrieb 9 Gegendruck erzeugen. Bei zunehmender Geschwindigkeit zieht .dieselbe Masse infolge der wirkenden Fliehkraft zur Gleisbogenaußenseite hin, und der Linearantrieb 9 muß durch Zug entgegenwirken. Die Steuerung des Linearantriebes 9 zur Synchronbewegung der Wagenkastenneigeeinrichtung 2 für den Wagenkasten 1 und der Stellung des Rahmens 5 mit dem Stromabnehmer 3 erfolgt über bekannte Systeme. In dem Ausführungsbeispiel wird von einer Versorgungseinrichtung 15 und einem Steuersystem 16 über entsprechende Leitungen 17 der Linearantrieb 9 beaufschlagt. Die Steuerung des Linearantriebes 9 kann bekannterweise elektromechanisch über Spindelantrieb, elektro-hydraulisch durch Kompakteinheiten (Motor-Pumpe-Zylinder) oder elektrohydraulisch über zentrale Versorgungseinrichtungen 15 (Hydraulikaggregat im Wagenkasten 1) ausgebildet sein. Hierbei kann der Linearantrieb 9 als Gleichgangzylinder oder mit zwei Linearantrieben 9 als Differentialzylinder gegenüberliegend angeordnet sein. Bei Störanfällen, z.B. Ausfall der Hydraulik wird der Wagenkasten 1 automatisch in die Normallage gebracht und demzufolge nimmt auch der Stromabnehmer 3 die Normallage ein. Zur Unterstützung ist dazu ein Federsystem 18 vorgesehen, das zwischen den Pendeln 7 und dem Grundrahmen 14 angeordnet ist. Die Pendel 7 können gerade und für die aktive Seite zur besseren Raumausnutzung geknickt ausgeführt sein, so daß eine bessere Abnbindung des Linearantriebes 9 bei verhältnismäßig großen Schwenkwinkeln möglich ist. Diese Ausführungsform ist in den Zeichnungen nicht dargestellt. Der vorgeschlagene Stromabnehmer 3 ist in eine kompakte Leichtbaukonstruktion eingefügt, die besonders stabil in Fahrtrichtung und leicht pendelnd quer zur Fahrtrichtung ausgebildet ist. Die konstruktive Ausbildung schafft ausreichend Spielraum für die bewegten Teile auch bei niedrigster Fahrdrahthöhe bzw. bei maximal eingefahrenem Stromabnehmer 3. Durch die Rahmenkonstruktion und durch seine Aufhängung mittels Pendeln 7 und Ansteuerung über Linearantrieb 9 wird annähernd eine mittlere Stellung des Stromabnehmers 3 unter dem Fahrdraht 4 unabhängig von der Wagenkastenfederung gewährleistet. Ein weitere Vorteil wird dadurch erreicht, daß der komplette Grundrahmen 14 mit der eingehangenen Rahmenkonstruktion einschließlich dem daran befestigten Stromabnehmer 3 unkompliziert ausgetauscht werden kann.

### Aufstellung der verwendeten Bezugszeichen

- 1: Wagenkasten
- 2: Wagenkastenneigeeinrichtung
- 3: Stromabnehmer
- 4: Fahrdraht
- 5: Rahmen
- 6: Isolatoren
- 7: Pendel
- 8: Lagerbock
- 9: Linearantrieb
- 10: Verstärkungen
- 11: oberes Rahmenteil
- 12: unteres Rahmenteil
- 13: Lager
- 14: Grundrahmen
- 15: Versorgungseinrichtung
- 16: Steuersystem
- 17: Leitungen (hydraulisch)
- 18: Federsystem
- A: Abstand
- A': Abstand

## Patentansprüche

1. Stromabnehmer für Schienenfahrzeuge mit Neigetechnik, wobei der Stromabnehmer quer zur Längsachse des Fahrzeuges auf einem Dachrahmen angeordnet bzw. mit Kipphebelgestängen ausgerüstet ist, **dadurch gekennzeichnet, dass** eine Rahmenkonstruktion in kompakter Bauweise aus zwei hintereinander angeordneten trapezförmigen Rahmen (5), die an jeweils zwei Pendeln (7) aufgehangen sind, besteht, wobei der Stromabnehmer (3) mit Isolatoren (6) auf einem oberen Rahmenteil (11) aufgebaut ist und die Pendel (7) an Lagerböcken (8) an einem Grundrahmen (14) aufgehangen und über Lager (13) mit einem unteren Rahmenteil (12) des Rahmens (5) quer zur Fahrtrichtung gelenkig verbunden sind, **wobei** die Aufhängung mit einem Abst **(A)** zwischen den oberen Lagerböcken (8) und **mit** einem **dazu kleineren** Abstand **(A')** zwischen den Lagern (13) am unteren Rahmenteil (12) ausgebildet ist und ein am Grundrahmen (14) befestigter Linearantrieb (9) seitlich an dem Pendel (7) angreift und der Linearantrieb (9) von einem Steuersystem (16) entsprechend der Neigung des Wagenkastens (1) über Leitungen (17) beaufschlagt wird.

## Claims

1. Current collector for rail vehicles with an inclination device, the current collector being arranged on a roof frame transversely with respect to the longitudinal axis of the vehicle and/or being equipped with rocker lever linkages, **characterized in that** a frame structure of compact design is composed of two trapezoidal frames (5) which are arranged one behind the other and which are suspended from two pendulums (7) in each case, the current collector (3) being constructed with insulators (6) on an upper frame part (11), and the pendulums (7) being suspended from bearing blocks (8) on a base frame (14) and being connected in articulated fashion by bearings (13) to a lower frame part (12) of the frame (5) transversely with respect to the travelling direction, the suspension being embodied with a distance (A) between the upper bearing blocks (8) and with a smaller distance (A') between the bearings (13) on the lower frame part (14), and a linear drive (9) which is attached to the base frame (14) engaging laterally on the pendulum (7), and the linear drive (9) being acted upon by a control system (16) via lines (17) in accordance with the angle of inclination of the wagon body (1).

## Revendications

1. Pantographe de prise de courant pour véhicules ferroviaires pendulaires, le pantographe de prise de courant étant disposé transversalement par rapport à l'axe longitudinal du véhicule sur bâti de toit et étant équipé de tringles de levier basculant, **caractérisé en ce qu'**une structure de bâti construite de manière compacte est constituée de deux cadres (5) de forme trapézoïdale disposés l'un derrière l'autre et suspendus chaque fois à deux pendules (7), le pantographe (3) de prise de courant étant monté avec des isolateurs (6) sur une partie supérieure de cadre (11), les pendules (7) étant suspendus à des chevalets (8) d'un bâti de base (14) et reliés de manière articulée transversalement par rapport à la direction d'avancement par des paliers (13) à une partie inférieure de cadre (12) du bâti (5), la suspension étant configurée avec un écart (A) entre les chevalets supérieurs (8) et avec un écart (A'), plus petit que le premier, entre les paliers (13) de la partie inférieure de cadre (12), et un entraînement linéaire (9) fixé sur le cadre de base (14) s'engage latéralement sur le pendule (7), l'entraînement linéaire (9) étant alimenté par un système de commande (16) par l'intermédiaire de conducteurs (17) en correspondance à l'inclinaison du caisson (1) de la voiture.
